# EUROPEAN PATENT SPECIFICATION

(11) **EP 2 683 112 B1**
(45) Date of publication and mention of the grant of the patent: **27.09.2017**
(21) Application number: 12174736.4
(22) Date of filing: 03.07.2012
(51) Int. Cl.: H04L 9/32, H04L 9/06

(54) **Secure message transmission**
Sichere Nachrichtenübertragung
Transmission de messages en toute sécurité

(43) Date of publication of application: 08.01.2014
(73) Proprietor: ABB Research Ltd., 8050 Zürich (CH)
(72) Inventor: Kirrmann, Hubert, 5405 Dättwil (CH); Önal, Cagri, 8050 Zürich (CH)
(74) Representative: ABB Patent Attorneys

(56) References cited:
- EP-A1- 1 615 370
- US-A- 5 671 283
- US-B1- 6 697 943
- SMID M E: "AUTHENTICATION USING THE FEDERAL DATA ENCRYPTION STANDARD", PROCEEDINGS OF THE NATIONAL ELECTRONICS CONFERENCE, NATIONAL ENGINEERING CONSORTIUM INC. OAK BROOK, ILLINOIS, US, vol. 35, 1 October 1981 (1981-10-01), pages 296-301, XP002037821,

## Description

### FIELD OF THE INVENTION

The invention relates to the field of securing messages within a communication network of an industrial process control system, in particular of a substation automation system. Specifically, the present invention relates to a method of and a system for securing messages.

### BACKGROUND OF THE INVENTION

In a communication network securing messages is of great importance for accurate and safe operation. Different levels of security are necessary depending on a potential threat to the network. In the case of malicious messages being a threat to the network, a method of message authentication may be sufficient to protect the network. In the case of eavesdropping being a threat, a more complex method such as message encryption may be needed to protect the network. Further objectives may be prevention of playback and spoofing, as well as intrusion detection.

However, securing messages is very time consuming and costly. According to the state of the art, securing a message requires a great amount of time compared to the time actually needed for handling the message.

For authentication, a sender generates, based on the message contents, a signature known in the art as message authentication code (MAC), appends the MAC to the message and finally sends the message via the network. Specifically, the sender generates the signature from an authentication algorithm and a receiver can authenticate the sender by checking the signature. The authentication algorithm may be asymmetrical or symmetrical, the latter including e.g. hashed message authentication code (HMAC), Galois field MAC (GMAC) and secure cipher block chaining MAC (XCBCMAC). Conventional implementations of the algorithms for authentication require the message to be entirely received before generating the signature authentication, which results in large processing overhead. Accordingly, state of the art authentication causes significant delays for transmitting and forwarding of messages within the communication network. As a result although enhanced security is needed authentication is not applied as of time constraints for transmitting messages.

In particular in the case of substation automation according to the standard IEC 61850, the security scheme to be used is described in IEC 62351. The different security objectives include authentication of data transfer through digital signatures, ensuring authenticated access, prevention of eavesdropping, prevention of playback and spoofing, and intrusion detection. However, there are no known commercial applications to this point. Furthermore, the high overhead to security features may prevent the network from fulfilling its real-time constraints. For instance, in the case of hash and sign paradigm for digital signature creation, asymmetrical algorithms are much more time consuming than symmetrical algorithms and tend to violate the real time requirements of substation automation systems. Thus, asymmetrical encryption algorithms are rarely used, in particular in the case of substation automation.

Furthermore, transmitting and forwarding of a message within the communication network is delayed by performing an integrity check operation. The integrity check allows uncovering accidental or malicious modifications to the message by generating a checksum. A checksum is computed from a block of the message for detecting errors that may have been introduced during transmission or storage. The integrity of the data can be checked at any time thereafter by re-generating the checksum and comparing it with the checksum of the message received.

Patent document EP-1 615 370 A1 discloses a method for authenticating short messages. For each message, a message authentication code (MAC) is derived, wherein the MAC not only depends on the message itself, but also on the MAC of the previous message. That way, not only the integrity of the messages can be guaranteed, but also the order wherein the messages were sent.

Patent document US 5,671,283 discloses similar teachings, wherein each MAC is not only a function of the present packet, but also a function of all the previous packets.

### DESCRIPTION OF THE INVENTION

It is therefore an objective of the invention to accelerate the process of securing a message within a communication network of an industrial process control system, in particular a substation automation system. This objective is achieved by a method for securing a multi-block message and a communication network system according to the independent claims. Preferred embodiments are evident from the dependent patent claims, wherein the claim dependency shall not be construed as excluding further meaningful claim combinations.

According to the invention, a plain text multi-block message including characters arranged in blocks of a single size is to be transmitted between devices over a communication network of an industrial process control system, in particular of a substation automation system, or to be forwarded to upper layers of a communication stack of a device of such system. The multi-block message is to be secured by way of a block-based authentication code processing the blocks of the message in a serial manner, wherein authentication information of a non-initial block of the message is generated based on authentication information of a previous block that was processed earlier. Thus, only residue of the previous block in form of the authentication information is needed to generate the authentication information of the next block. Therefore, the previous block can already be further processed in particular already be transmitted or forwarded respectively while authentication information of the next block is generated. This enables on-the-fly authentication of the multi-block message and authentication at an increased rate of more than 1Gbit/s. This allows further to use simplified devices for securing messages and reduces the computation costs.

Ultimately, authentication information of a final block specifically of the last block of the message to be processed includes a summary of the authentication information of each block of the multi-block message and may be considered a message authentication signature for the entire multi-block message. Subsequently, such signature is appended to the message preferably to the final block of the message. From the summary the authentication information of each block can be checked after the message is received by another communication network device or further layers of the same device.

For authentication of the received message the block-wise authentication information and finally the authentication signature is re-generated after receiving the message. The original authentication signature of the received message is cross checked with the re-generated signature. For matching signatures, the received message is considered secure and authenticated.

A preferred variant of the invention is the use within precision time protocols (PTP) such as IEEE 1588 for precise time distribution and clock synchronization in electrical substations, wherein the use of a chained MAC (CMAC) as authentication is particularly advantageous. Furthermore, for IEC 62439-3 (HSR) the delay caused by securing the message is well below the required 5 µs maximum residence time of the message. Detailed investigations are being published in C. Onal and H. Kirrmann, International IEEE Symposium on Precision Clock Synchronization for Measurement, Control and Communication, San Francisco, 2012.

In a preferred variant of the invention, the multi-block message to be secured is to be checked for integrity after being received by a communication network device. The integrity check is introduced for the purpose of detecting accidental errors that may have occurred during transmission or storage of the message. Some integrity check operations may be based on special algorithms that not only detect errors but also allow the original data to be recovered in certain cases.

According to this embodiment of the invention the integrity check operation is block based, wherein the blocks may be different from the blocks used for authentication. This way the algorithm for the integrity check can be optimized with respect to size of the used blocks particularly by number of characters or certain bits of the message.

However, the operation is carried out in parallel to the authentication of the multi-block message and in a similar fashion. An integrity check value is generated for a block of the message based on a specific residue of a previous block. Similar to the operation of authentication, this enables an on-the-fly integrity check of the multi-block message and an integrity check at an increased speed. Finally, a checksum is generated from the integrity check value of each block of the message and appended to a final block. The integrity of an incoming message can be checked by re-generating the integrity check value and ultimately the checksum and by subsequent comparison of the received and re-generated checksum. In case of matching checksums, the integrity of the incoming message is verified.

In an advantageous embodiment of the invention, the multi-block message is encrypted for enhanced confidentiality and further security. Standards and cryptographic software as well as hardware to perform encryption are widely available, but successfully using encryption to ensure security is challenging. According to this embodiment of the invention, encryption is carried out on-the-fly and concurrent with, or in parallel to, authentication and the integrity check operation. Preferably, a block based algorithm is used for encryption, wherein a single shared block cipher may even be used both to encrypt and to calculate an authentication signature.

Specifically, it may be advantageous to generate the authentication information of a block before or after encryption of said block depending on the algorithms used for each operation, e.g. when using the same block size for authentication and encryption; authentication may also be carried out after encryption of the message blocks. In case a shared cipher or encryption engine is used, intermediate authentication signature values can be obtained from the manipulation of the encrypted input data blocks (or vice versa).

The present invention also relates to a communication network system of an industrial process control system, in particular of a substation automation system comprising a communication network device adapted to securing a multi-block message. The communication network device is adapted to separate the message in sorted blocks and apply a block-based security code. The block authentication information for a block of the message is generated based on residue of the block and based on block authentication information of a previous block while transmitting the previous block of the message. Each block of the message is encrypted while an encrypted previous block is transmitted. A message authentication signature is generated based on the block authentication information of a final block of the message, and ultimately the authentication signature is appended to the final block of the message or a received authentication signature appended to the message is verified.

Accordingly, the message is transmitted or forwarded respectively while some of the content is still processed in form of generating authentication, generating the checksum or encrypting the message. This way time delay for processing of the message is reduced to a minimum, thus, enabling on-the-fly security for the communication network at a high transmitting rate at low computation costs.

### BRIEF DESCRIPTION OF THE DRAWINGS

The subject matter of the invention will be explained in more detail in the following text with reference to preferred exemplary embodiments which are illustrated in the attached drawings, in which:
- Fig.1: schematically shows a communication device with an incoming and an outgoing multi-block message;
- Fig.2: schematically shows a process of generating an authentication to be appended to an outgoing message; and
- Fig.3: schematically shows a process of authentication and encryption of an outgoing message.

The reference symbols used in the drawings, and their meanings, are listed in summary form in the list of designations. In principle, identical parts are provided with the same reference symbols in the figures.

### DETAILED DESCRIPTION OF PREFERRED EMBODIMENTS

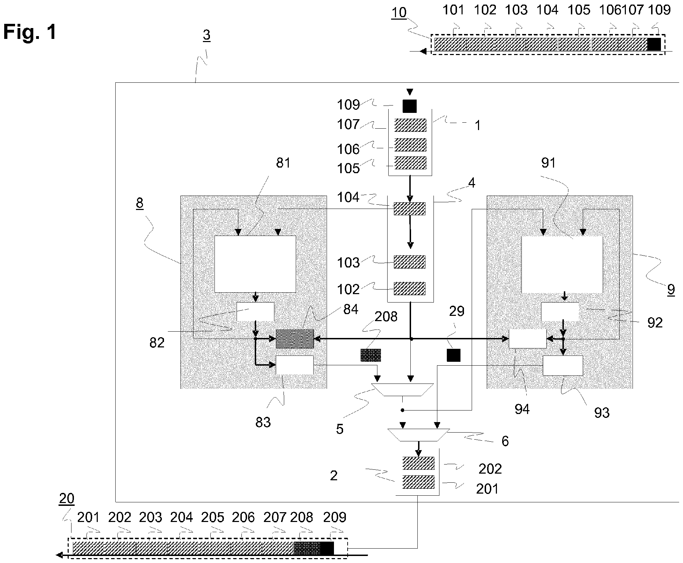

Fig.1 shows schematically securing of a multi-block message 100 using a communication network device 3. The device 3 is comprised of a message input 1 and a message output 2, a distributor 4, two signature compilers 5, 6, an authentication operator 8, and an integrity check operator 9. The multi-block message 100 is comprised of a preamble block 101, content blocks 102, 103, 104, 105, 106, 107 and a final block 109 containing an integrity checksum. The message 100 is first received by the network device 3 via the input 1, wherein the message is separated and sorted by blocks 102, 103, 104, 105, 106, 107. The final block 109 containing the integrity checksum is removed by the message input 1.

Subsequently, the distributor 4 is forwarding the blocks 102, 103, 104, 105, 106, 107 one by one to the authentication operator 8 and the integrity check operator 9, wherein the blocks 102, 103, 104, 105, 106, 107 can be different in size for the authentication operator 8 and the integrity check operator 9. This way the block size can be optimized to fit the respective algorithm for authentication and generation of the integrity checksum.

For authentication, the operator 8 receives and processes the message block by block, wherein after an authentication information is generated for one block 102, 103, 104, 105, 106, 107 by a block processor 81 the next block 102, 103, 104, 105, 106, 107 is received from the distributor 4. A post processor 82 transmits the authentication information to a shuffling unit 83 in case this is required by the authentication algorithm, wherein the shuffling unit 83 computes an authentication signature from the authentication information. In addition, residue or characters needed to calculate the authentication information of the next block 102, 103, 104, 105, 106, 107 is temporarily stored in a storage unit 84 to be redirected to the block processor 81.

The shuffling unit 83 sends the generated authentication signature 208, 508 to a compiler 5, where the signature 208, 508 is appended to the final block 107 of the message 100. The blocks 102, 103, 104, 105, 106, 107 are forwarded to the message output 2 of the network device 3, where the blocks 102, 103, 104, 105, 106, 107 are transmitted on-the-fly to a further network communication device.

Respectively, an integrity checksum 209 is generated by an integrity check operator 91 in parallel to authentication, where the procedure is equivalent to the generation of the authentication information 502, 503, 504, and a signature 208, 508 apart from an integrity information and a checksum to be generated for each block 102, 103, 104, 105, 106, 107. A shuffling unit 93 forwards the integrity checksum to a compiler 6, which appends the integrity checksum 209 to the authentication signature 208, 508 of the message 100. For specific algorithms the authentication signature 208, 508 may be included in the generation of the integrity checksum 209, where the authentication operator 81 exchanges the necessary information such as the authentication signature 208, 508 with the integrity check operator 91 or vice versa.

Ultimately, the outgoing message 200 is transmitted on-the-fly and comprises general content blocks 201, 202, 203, 204, 205, 206, 207, the authentication signature block 208 and the integrity checksum 209.

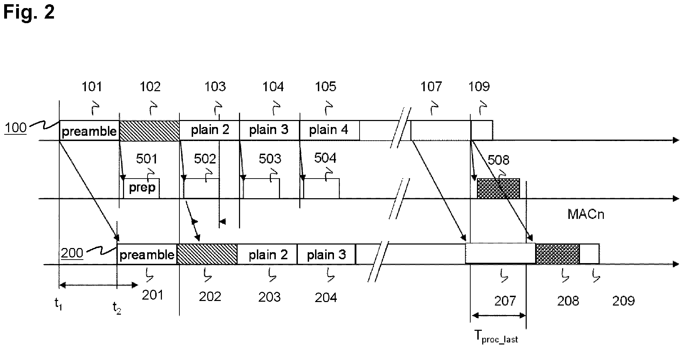

Fig. 2 shows schematically the process of securing a multi-block message 100 by authentication. A header 101 or preamble of the message is used as preparation information 501 to form the header of the outgoing message 200. For each block 102, 103, 104, 105, 106, 107 of the message 100 authentication information 502, 503, 504 is generated and stored temporarily. The authentication signature 508 is then generated from the stored authentication information 502, 503, 504. For transmitting the outgoing message 200 the preamble 201 and each block 202, 203, 204, 207 is transmitted on-the-fly while the authentication signature 508 is generated. Finally, the authentication signature 208 and the generated integrity checksum 209 are appended to the final block 207 of the message 200.

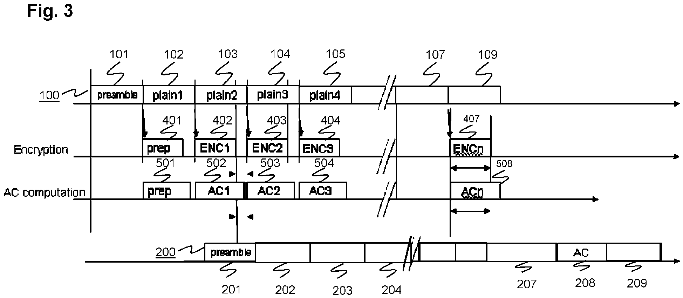

Fig. 3 shows schematically the process of securing the multi-block message 100 by encryption and authentication. The process is carried out as described in Fig. 2 aside from the blocks 102, 103, 104, 105, 106, 107 of the message 100 being encrypted before the authentication information 502, 503, 504 is generated. For encryption, encrypted blocks 401, 402, 403, 404, 407 are generated from the original blocks 101, 102, 103, 104, 107. The authentication information 502, 503, 504 is generated for each encrypted block 401, 402, 403, 404, 407. Ultimately, the authentication signature 208, 508 and the in parallel generated integrity checksum 209 are appended to the final block 207 of the message 200.

However, one skilled in the art will understand that the message 100 to be secured can be of indefinite length. According to the invention, a time delay for sending a message 200 is only introduced for processing the final block 207. Previous blocks 202, 203, 204 are already sent while the next block 202, 203, 204 is secured, thus not causing any time delay.

### LIST OF DESIGNATIONS

- 1: Input
- 2: Output
- 3: Device
- 4: Distributor
- 5, 6: Compiler
- 8: Authentication operator
- 9: Integrity check operator
- 81: Block processor
- 82: Post processor
- 83: Shuffling unit
- 84: Storage unit
- 91: Block processor
- 92: Post register
- 93: Shuffling unit
- 94: Storage unit
- 100: Multi-block message
- 101: Header
- 102-106: Block
- 107: Final block
- 109: Integrity checksum
- 200: Multi-block message
- 201: Preamble
- 202-206: Block
- 207: Final block
- 208: Authentication signature
- 209: Integrity checksum
- 401: Preamble information
- 402-408: Encrypted block
- 501: Preamble information
- 502-504: Authentication information
- 508: Authentication signature

## Claims

1. A method for securing a multi-block message (100) in a communication network of an industrial process control system, in particular of a substation automation system, **characterised by**:
- generating block authentication information (501, 502, 503, 504) for a block of the message (100, 200) based on characters of the block (102, 103, 104, 105, 106, 107) and based on block authentication information (501, 502, 503, 504) of a previous block (102, 103, 104, 105, 106, 107) while transmitting or forwarding the previous block (201, 202, 203, 204, 205, 206, 207) of the message,
- generating a message authentication signature (208, 508) based on the block authentication information (501, 502, 503, 504) of a final block (107) of the message (100), and
- appending the authentication signature (208, 508) to the final block (207) of the message (200), or verifying a received authentication signature (208) of the message (200).

2. The method according to claim 1 comprising encrypting a block (102, 103, 104, 105, 106, 107) of the message (100) while transmitting an encrypted previous block (401, 402, 403, 404, 407).

3. The method according to claim 2 comprising encrypting a block (102, 103, 104, 105, 106, 107) of the message (100), while generating the block authentication information (501, 502, 503, 504) of an encrypted previous block (401, 402, 403, 404, 407).

4. The method according to the claim 1 comprising verifying the received authentication signature (208) by comparing the received authentication signature (208) with the generated authentication signature (508).

5. The method according to any of the claims 1 to 4 comprising
- transmitting the message (200) to a second communication network device via a communication network, or
- forwarding the message (200) to an upper layer of a communication stack of the communication network device.

6. The method according to any of the claims 1 to 5 comprising performing an integrity check operation comprising
- generating an integrity check value for a block of the message based on the characters of the block (102, 103, 104, 105, 106, 107) and based on the integrity check value of a previous block (102, 103, 104, 105, 106, 107) while transmitting the previous block (102, 103, 104, 105, 106, 107) of the message (100, 200),
- generating an integrity checksum (209) based on the integrity check value of the blocks (102, 103, 104, 105, 106, 107) of the message (100, 200), and
- appending the integrity checksum (209) to the message (100, 200) for an outgoing message, or verifying a received integrity checksum (209) of the message (100, 200) for an incoming message.

7. The method according to claim 6, wherein the integrity check operation is performed after appending the authentication signature (208, 508) to the message (100, 200) for outgoing messages or before removing the authentication signature (208, 508) from the message for incoming messages.

8. The method according to any of the claims 1 to 7 comprising appending a tag to the message (100, 200) indicative of a failed authentication for forwarding the message (100, 200) to an upper layer processing unit of a communication network device (3).

9. A communication network device of an industrial process control system, in particular of a substation automation system, the communication network device for securing a multi-block message (100) in the communication network, **characterised in that** the communication network device is adapted to:
- generate block authentication information (501, 502, 503, 504) for a block (102, 103, 104, 105, 106, 107) of the message (100) based on the characters of the block (102, 103, 104, 105, 106, 107) and based on block authentication information (501, 502, 503, 504) of a previous block (102, 103, 104, 105, 106, 107) while transmitting the previous block (202, 203, 204, 205, 206, 207) of the message (200),
- encrypt a block (102, 103, 104, 105, 106, 107) of the message (100) while transmitting an encrypted previous block (202, 203, 204, 205, 206, 207),
- generate a message authentication signature (208, 508) based on the block authentication information (501, 502, 503, 504) of a final block (207) of the message (200), and
- append the authentication signature (208, 508) to the final block (207) of the message (200) or verifying a received authentication signature (208, 508) appended to the message (200).

10. A communication network system according to claim 9, wherein the communication network device (3) is located before a physical network interface, in-between two network interfaces, or before several output queues of a multiport bridging device.

## Patentansprüche

1. Verfahren zum Sichern einer Mehrblocknachricht (100) in einem Kommunikationsnetz eines Industrieprozesssteuersystems, insbesondere eines Unterstations-Automatisierungssystems, **gekennzeichnet durch**:
Erzeugen von Blockauthentifizierungsinformationen (501, 502, 503, 504) für einen Block der Nachricht (100, 200) basierend auf Zeichen des Blocks (102, 103, 104, 105, 106, 107) und basierend auf Blockauthentifizierungsinformationen (501, 502, 503, 504) eines früheren Blocks (102, 103, 104, 105, 106, 107), während der frühere Block (201, 202, 203, 204, 205, 206, 207) der Nachricht gesendet oder weitergeleitet wird,
Erzeugen einer Nachrichtenauthentifizierungssignatur (208, 508) basierend auf den Blockauthentifizierungsinformationen (501, 502, 503, 504) eines letzten Blocks (107) der Nachricht (100), und
Anhängen der Authentifizierungssignatur (208, 508) an den letzten Block (207) der Nachricht (200) oder Verifizieren einer empfangenen Authentifizierungssignatur (208) der Nachricht (200).

2. Verfahren nach Anspruch 1, das das Verschlüsseln eines Blocks (102, 103, 104, 105, 106, 107) der Nachricht (100), während ein verschlüsselter früherer Block (401, 402, 403, 404, 407) gesendet wird, umfasst.

3. Verfahren nach Anspruch 2, das das Verschlüsseln eines Blocks (102, 103, 104, 105, 106, 107) der Nachricht (100), während die Blockauthentifizierungsinformationen (501, 502, 503, 504) eines verschlüsselten früheren Blocks (401, 402, 403, 404, 407) erzeugt werden, umfasst.

4. Verfahren nach Anspruch 1, das das Verifizieren der empfangenen Authentifizierungssignatur (208) durch Vergleichen der empfangenen Authentifizierungssignatur (208) mit der erzeugten Authentifizierungssignatur (508) umfasst.

5. Verfahren nach einem der Ansprüche 1 bis 4, das Folgendes umfasst:
Senden der Nachricht (200) zu einer zweiten Kommunikationsnetzvorrichtung über ein Kommunikationsnetz, oder
Weiterleiten der Nachricht (200) zu einer höheren Schicht eines Kommunikations-Stack der Kommunikationsnetzvorrichtung.

6. Verfahren nach einem der Ansprüche 1 bis 5, das das Ausführen einer Integritätsprüfungsoperation umfasst, die Folgendes umfasst:
Erzeugen eines Integritätsprüfwerts für einen Block der Nachricht basierend auf den Zeichen des Blocks (102, 103, 104, 105, 106, 107) und basierend auf dem Integritätsprüfwert eines früheren Blocks (102, 103, 104, 105, 106, 107), während der frühere Block (102, 103, 104, 105, 106, 107) der Nachricht (100, 200) gesendet wird,
Erzeugen einer Integritätsprüfsumme (209) basierend auf dem Integritätsprüfwert der Blöcke (102, 103, 104, 105, 106, 107) der Nachricht (100, 200), und
Anhängen der Integritätsprüfsumme (209) an die Nachricht (100, 200) für eine ausgehende Nachricht oder Verifizieren einer empfangenen Integritätsprüfsumme (209) der Nachricht (100, 200) für eine ankommende Nachricht.

7. Verfahren nach Anspruch 6, wobei die Integritätsprüfoperation nach dem Anhängen der Authentifizierungssignatur (208, 508) an die Nachricht (100, 200) für ausgehende Nachrichten oder vor dem Entfernen der Authentifizierungssignatur (208, 508) aus der Nachricht für ankommende Nachrichten ausgeführt wird.

8. Verfahren nach einem der Ansprüche 1 bis 7, das Anhängen eines Identifizierungskennzeichens an die Nachricht (100, 200), das eine fehlgeschlagene Authentifizierung angibt, zum Weiterleiten der Nachricht (100, 200) zu einer Verarbeitungseinheit einer höheren Ebene einer Kommunikationsnetzvorrichtung (3) umfasst.

9. Kommunikationsnetzvorrichtung eines Industrieprozesssteuersystems, insbesondere eines Unterstations-Automatisierungssystems, wobei die Kommunikationsnetzvorrichtung zum Sichern einer Mehrblocknachricht (100) in dem Kommunikationsnetz dient,
**dadurch gekennzeichnet, dass** die Kommunikationsnetzvorrichtung ausgelegt ist:
Blockauthentifizierungsinformationen (501, 502, 503, 504) für einen Block (102, 103, 104, 105, 106, 107) der Nachricht (100) basierend auf den Zeichen des Blocks (102, 103, 104, 105, 106, 107) und basierend auf Blockauthentifizierungsinformationen (501, 502, 503, 504) eines früheren Blocks (102, 103, 104, 105, 106, 107) zu erzeugen, während der frühere Block (202, 203, 204, 205, 206, 207) der Nachricht (200) gesendet wird,
einen Block (102, 103, 104, 105, 106, 107) der Nachricht (100) zu verschlüsseln, während ein verschlüsselter früherer Block (202, 203, 204, 205, 206, 207) gesendet wird,
eine Nachrichtenauthentifizierungssignatur (208, 508) basierend auf den Blockauthentifizierungsinformationen (501, 502, 503, 504) eines letzten Blocks (207) der Nachricht (200) zu erzeugen, und
die Authentifizierungssignatur (208, 508) an den letzten Block (207) der Nachricht (200) anzuhängen oder eine empfangene Authentifizierungssignatur (208, 508), die an die Nachricht (200) angehängt ist, zu verifizieren.

10. Kommunikationsnetzsystem nach Anspruch 9, wobei sich die Kommunikationsnetzvorrichtung (3) vor einer physikalischen Netzschnittstelle, zwischen zwei Netzschnittstellen oder vor mehreren Ausgangswarteschlangen einer Mehranschlussbrückenvorrichtung befindet.

## Revendications

1. Procédé de sécurisation d'un message multibloc (100) dans un réseau de communication d'un système de contrôle de processus industriel, en particulier d'un système d'automatisation de poste électrique,
**caractérisé par** les étapes consistant à :
générer une information d'authentification de bloc (501, 502, 503, 504) pour un bloc du message (100, 200) sur la base de caractères du bloc (102, 103, 104, 105, 106, 107) et sur la base d'une information d'authentification de bloc (501, 502, 503, 504) d'un bloc précédent (102, 103, 104, 105, 106, 107) pendant la transmission ou le transfert du bloc précédent (201, 202, 203, 204, 205, 206, 207) du message ;
générer une signature d'authentification de message (208, 508) sur la base de l'information d'authentification de bloc (501, 502, 503, 504) d'un bloc final (107) du message (100) ; et
ajouter la signature d'authentification (208, 508) au bloc final (207) du message (200), ou vérifier une signature d'authentification reçue (208) du message (200).

2. Procédé selon la revendication 1, consistant à crypter un bloc (102, 103, 104, 105, 106, 107) du message (100) pendant la transmission d'un bloc précédent crypté (401, 402, 403, 404, 407).

3. Procédé selon la revendication 2, consistant à crypter un bloc (102, 103, 104, 105, 106, 107) du message (100) pendant la génération de l'information d'authentification de bloc (501, 502, 503, 504) d'un bloc précédent crypté (401, 402, 403, 404, 407).

4. Procédé selon la revendication 1, consistant à vérifier la signature d'authentification reçue (208) en comparant la signature d'authentification reçue (208) à la signature d'authentification générée (508).

5. Procédé selon l'une quelconque des revendications 1 à 4, consistant à :
transmettre le message (200) à un second dispositif de réseau de communication par l'intermédiaire d'un réseau de communication ; ou
transférer le message (200) à une couche supérieure d'une pile de communication du dispositif de réseau de communication.

6. Procédé selon l'une quelconque des revendications 1 à 5, consistant à réaliser une opération de contrôle d'intégrité, consistant à :
générer une valeur de contrôle d'intégrité pour un bloc du message sur la base des caractères du bloc (102, 103, 104, 105, 106, 107) et sur la base de la valeur de contrôle d'intégrité d'un bloc précédent (102, 103, 104, 105, 106, 107) pendant la transmission du bloc précédent (102, 103, 104, 105, 106, 107) du message (100, 200) ;
générer une somme de contrôle d'intégrité (209) sur la base de la valeur de contrôle d'intégrité des blocs (102, 103, 104, 105, 106, 107) du message (100, 200) ; et
ajouter la somme de contrôle d'intégrité (209) au message (100, 200) pour un message sortant, ou vérifier une somme de contrôle d'intégrité reçue (209) du message (100, 200) pour un message entrant.

7. Procédé selon la revendication 6, dans lequel l'opération de contrôle d'intégrité est réalisée après l'ajout de la signature d'authentification (208, 508) au message (100, 200) pour les messages sortants, ou avant la suppression de la signature d'authentification (208, 508) du message pour les messages entrants.

8. Procédé selon l'une quelconque des revendications 1 à 7, consistant à ajouter au message (100, 200) une étiquette indiquant l'échec d'une authentification pour le transfert du message (100, 200) vers une unité de traitement de couche supérieure d'un dispositif de réseau de communication (3).

9. Dispositif de réseau de communication d'un système de contrôle de processus industriel, en particulier d'un système d'automatisation de poste électrique, le dispositif de réseau de communication permettant de sécuriser un message multibloc (100) dans le réseau de communication,
le dispositif de réseau de communication étant **caractérisé en ce qu'**il est conçu pour :
générer une information d'authentification de bloc (501, 502, 503, 504) pour un bloc (102, 103, 104, 105, 106, 107) du message (100) sur la base des caractères du bloc (102, 103, 104, 105, 106, 107) et sur la base d'une information d'authentification de bloc (501, 502, 503, 504) d'un bloc précédent (102, 103, 104, 105, 106, 107) pendant la transmission du bloc précédent (202, 203, 204, 205, 206, 207) du message (200) ;
crypter un bloc (102, 103, 104, 105, 106, 107) du message (100) pendant la transmission d'un bloc précédent crypté (202, 203, 204, 205, 206, 207) ;
générer une signature d'authentification de message (208, 508) sur la base de l'information d'authentification de bloc (501, 502, 503, 504) d'un bloc final (207) du message (200) ; et
ajouter la signature d'authentification (208, 508) au bloc final (207) du message (200), ou vérifier une signature d'authentification reçue (208, 508) ajoutée au message (200).

10. Système de réseau de communication selon la revendication 9, dans lequel le dispositif de réseau de communication (3) est situé avant une interface réseau physique, entre deux interfaces réseau, ou avant plusieurs files d'attente de sortie d'un dispositif de pontage multiport.
